# EUROPEAN PATENT APPLICATION

(11) **EP 1 067 710 A1**
(43) Date of publication of application: **10.01.2001**
(21) Application number: 99440183.4
(22) Date of filing: 08.07.1999
(51) Int. Cl.: H04B 7/02, H01Q 3/26, H01Q 1/24

(54) **Mobile telecommunication system comprising an adaptive base station antenna**

(71) Applicant: ALCATEL, 75008 Paris (FR)
(72) Inventor: Mortensen, Ivar, Dr.-ing., D - 70825 Korntal (DE); Jeschke, Michael, Dipl.-ing., D - 70197 Stuttgart (DE)
(74) Representative: Schäfer, Wolfgang, Dipl.-Ing.

(57) **Abstract**

The present invention relates to a mobile telecommunication system (1) comprising at least one Base Station (BS) and at least one User Equipment (UE), a Base Station (BS) having an adaptive antenna (2) for downlink- and uplink-transmission of signals between said Base Station (BS) and a User Equipment (UE) by means of an adjustable antenna-beam (3). The antenna-beam (3) is adjusted by means of a closed loop control, preferably by using the functionality of a closed loop power control (CLPC) of the telecommunication system (1). The telecommunication system (1) is preferebly a Universal Mobile Telecommunication System (UMTS) which transmits the signals between said Base Station (BS) and said User Equipment (UE) according to a Code Division Multiple Access (CDMA)-method.

## Description

The present invention relates to a mobile telecommunication system comprising at least one Base Station and at least one User Equipment, a Base Station having an adaptive antenna for downlink- and uplink-transmission of signals between said Base Station and a User Equipment by means of an adjustable antenna-beam.

Furthermore, the invention relates to a Base Station of a mobile telecommunication system, the Base Station having an adaptive antenna for downlink- and uplink-transmission of signals between said Base Station and a User Equipment of said mobile telecommunication system by means of an adjustable antenna-beam.

Finally, the invention relates to a User Equipment of a mobile telecommunication system comprising at least one Base Station and at least said User Equipment, a Base Station having an adaptive antenna for downlink- and uplink-transmission of signals between said Base Station and said User Equipment by means of an adjustable antenna-beam.

There are mobile telecommunication systems known in the state of the art comprising at least one Base Station and at least one User Equipment. The User Equipment, for example, is a mobile phone of an end user. The Base Stations of these known telecommunication systems use so called omni-antennas for downlink- and uplink-transmission of signals between a Base Station and a User Equipment. With transmission emitting as well as receiving is intended. The omni-antennas emit signals to all sides of the antenna. The transmitted signals may be information-signals containing voice data or other information respectively or they may be control-signals containing data for controlling the transmission between the Base Station and the User Equipment.

Other known telecommunication systems use adaptive antennas instead of omni-antennas. The adaptive antennas are used for downlink- and uplink-transmission of signals between the Base Station and the at least one User Equipment by means of an adjustable antenna-beam. The antenna-beam may be adjusted in its direction, in its width or in any other dimension respectively. By adjusting the antenna-beam the efficiency of the antenna is improved, that is the transmission may be carried out with less antenna-power.

In the state of the art telecommunication systems with adaptive antennas being divided into various sektors are known. For uplink-transmission it is possible to activate those sectors of the antenna, in which the signal received from a User Equipment is strongest. The antenna-beam is adjusted in order to maximize the received signal.

For downlink-transmission the adjustment of the antenna-beam is more complicated. It is possible to make the User Equipment emit some kind of an uplink-signal from time to time. The Base Station may receive the uplink-signal. It is possible to activate those sectors of the antenna, in which the uplink-signal is strongest and to adjust the antenna-beam for downlink-transmission according to the activated sector.

However, this kind of adjustment of the antenna-beam has the disadvantage that the telecommunication system has to be calibrated, that is it has to be determined how the antenna-beam is to be adjusted according to the uplink-signal in order to best reach the User Equipment with the antenna-beam for downlink-transmission. The calibration of the telecommunication system may vary due to fluctuations of temperature or due to the variation of other external parameters. This may make necessary a repeated calibration of the telecommunication system.

It is therefore an object of the present invention to provide a mobile telecommunication system of the kind mentioned in the beginning, which allows an adjustment of an adaptive antenna in a more simple way.

According to the invention, this object is solved by a mobile telecommunication system of the kind mentioned in the beginning, characterized in that said antenna-beam is adjusted by means of a closed loop control comprising said Base Station and said User Equipment,
- said Base Station comprising first means for varying said antenna-beam in at least one dimension according to a given jittering-code and for emitting said signals with a given emitting characteristic,
- said User Equipment comprising second means for receiving said signals with a certain receiving characteristic,
- said User Equipment comprising third means for evaluating said receiving characteristic,
- said User Equipment comprising fourth means for emitting a correction-signal, which depends on the result of said evaluation of said receiving characteristic,
- said Base Station comprising fifth means for receiving said correction-signal and
- said Base Station comprising sixth means for adjusting said antenna-beam according to said correction-signal.

The mobile telecommunication system according to the present invention has the advantage, that the antenna-beam of the adaptive antenna can be adjusted in a very simple way. For adjusting the antenna-beam a closed loop control comprising the Base Station and the User Equipment is used. By means of the closed loop control the antenna-beam can be adjusted in order to follow a User Equipment moving around within the range of the Base Station, so called beam-tracking can be performed. The effect of fluctuations of temperature or the variation of other external parameters will be compensated within the closed loop control. The telecommunication system has to be calibrated only roughly, the fine-adjustment of the antenna-beam is carried out by the closed loop control.

The Base Station of the mobile telecommunication system according to the present invention comprises first means for varying said antenna-beam. The first means may vary the antenna-beam in one or more different dimensions. These dimensions may be, for example, the direction or the width of the antenna beam. The antenna-beam is varied according to a given jittering-code. If the antenna-beam is varied in more than one dimension, it may be varied according to a different jittering-code for each dimension.

Varying the antenna-beam according to a jittering-code e.g. in its direction means, that the antenna-beam points in a virtual direction and is varied by a few degrees to the left and to the right of the virtual direction. Whether the antenna-beam is varied to the left or to the right depends on the jittering-code.

The first means also emit signals with a given emitting characteristic. The emitting characteristic may, for example, be the power, the signal-to-interference ratio (SIR) or any other physical characteristic of the signals. Preferebly the antenna-beam is varied at a smaller frequency than the frequency of the signals being emitted by the Base Station. This is due to the fact that the third means of the User Equipment need a certain amount of time to evaluate the receiving characteristic of the signals received by the second means.

The User Equipment comprises second means for receiving said signals emitted by the first means of the Base Station. The signals are received with a certain receiving characteristic. The receiving characteristic is usually of the same kind as the emitting characteristic but of different value. The receiving characteristic may, for example, be the power, the signal-to-interference ratio (SIR) or any other physical characteristic of the signals. Depending on the location of the User Equipment in respect to the antenna of the Base Station the value of the receiving characteristic will vary. If, for example, the varying antenna-beam reaches the User Equipment constantly, the receiving characteristic will have a more or less constant value. If, however, the varying antenna-beam reaches the User Equipment just from time to time, the receiving characteristic will probably have a value oscillating with the variation-frequency of the antenna-beam. If the antenna-beam reaches the User Equipment more or less directly ("line of sight") it is most probable that, for example, the power of the received signals has a higher value than if the antenna-beam reaches the User Equipment only after a number of reflections at the front of buildings or at a series of mountains ("multipath-transmission"). Therefore, it may be said that the receiving characteristic of the signals depends very much on the location of the User Equipment in respect to the Base Station.

If, furthermore, the antenna-beam is varied in the dimension of its direction, the receiving characteristic of the signals will be different to the receiving characteristic of the signals if the antenna-beam is varied in the dimension of its width.

The User Equipment furthermore comprises third means for evaluating said receiving characteristic of the signals. In addition the User Equipment comprises fourth means for emitting a correction-signal, which depends on the result of said evaluation of said receiving characteristic. The correction-signal depends on the receiving characteristic of the signals. If the antenna-beam is varied in direction by the first means the correction-signal may be used as an indication for the location of the User Equipment in respect to the Base Station. Accordingly, if the antenna-beam is varied in another dimension the correction-signal may be used as an indication for other parameters of the User Equipment.

The Base Station comprises fifth means for receiving the correction-signal. The Base Station, furthermore, comprises sixth means for adjusting the antenna-beam according to the received correction-signal. Of course, before adjusting the antenna-beam, it has to be determined how the correction-signal has to be interpreted, that is how the antenna-beam has to be adjusted so that the transmitted signals reach the User Equipment with the highest efficiency possible. There are different ways of adjusting the antenna beam, for instance, the direction of the virtual direction of the antenna-beam or the width of the antenna beam may be adjusted.

Three different cases of possible locations of the User Equipment in respect to the Base Station have to be distinguished. If, in the first case, the User Equipment is located out of reach of the antenna-beam, no signals will be received by the User Equipment and consequently the User Equipment will not emit any correction-signal. There is no correction-signal for the Base Station to receive and no adjustment of the antenna-beam is performed. A consequence may be to vary the antenna-beam within a larger range in order to reach the User Equipment with the varying antenna-beam.

In the second case it is presumed that the User Equipment is located in respect to the Base Station in such a manner that the varying antenna-beam reaches the User Equipment only from time to time during variation. Depending on whether the antenna-beam reaches the User Equipment or not the User Equipment will receive the signals with varying receiving characteristics and therefore will emit a varying correction-signal, depending on the result of the evaluation of the receiving characteristic. The Base Station will adjust the antenna-beam according to the varying correction-signal.

In the third case it is presumed that the User Equipment is located in respect to the Base Station in such a manner that it is constantly reached by the varying antenna-beam. The User Equipment will receive the signals with a constant receiving characteristic and therefore will emit a constant correction-signal. The Base Station will adjust the antenna-beam according to the correction-signal.

According to a preferred embodiment of the present invention said signals are transmitted by means of a Code Division Multiple Access (CDMA)-method between said Base Station and said User Equipment. The CDMA-method is used, for instance, in mobile telecommunication systems working according to the Universal Mobile Telecommunication System (UMTS)-standard. In UMTS-telecommunication systems several of the first to sixth means are already provided in the Base Station or in the User Equipment and can be used for adjusting the antenna-beam of a adaptive antenna of a mobile telecommunication system according to the present invention. With UMTS-telecommunication systems the invention can be realized in a particularly simple way.

Any jittering-codes may be used for varying the antenna-beam of the Base Station. If jittering-codes are used which are not orthogonal to one another, codes with a cross-correlation value as small as possible should be used. Codes from code groups known in the state of the art, which are optimized according to their cross-correlation value, may be used as jittering-codes.

According to a preferred embodiment of the present invention said jittering-code is a code from an orthogonal code group. This means that the jittering-codes for the various dimensions, in which the antenna-beam is being varied in, of one Base Station are orthogonal to one another. The signals from this Base Station to the various User Equipment will therefore provoke no mutual interferences.

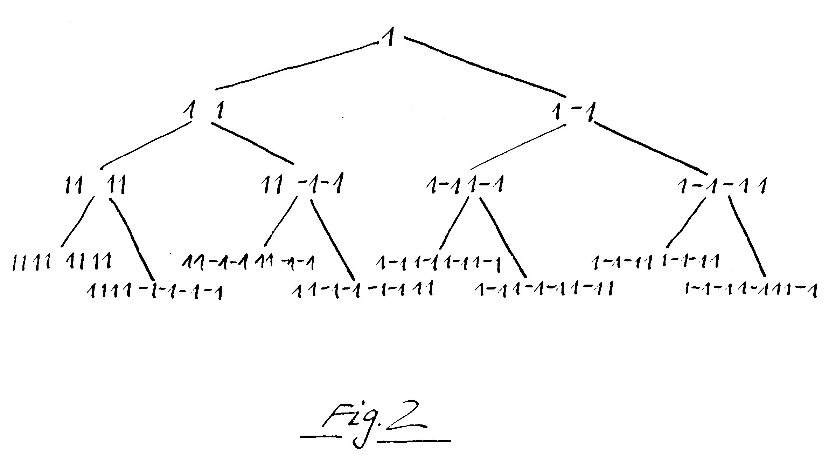

A further development of the invention suggests that the jittering-code is determined by means of the Walsh-Hadamard-code-tree. The Walsh-Hadamard-code-tree is one of various possibilities of determining jittering-codes which are orthogonal to one another. Figure 2 shows a Walsh-Hadamard-code-tree with four levels. Beginning from the top of the tree the first level (level 0) contains only one possible jittering-code with a 1-bit-length (2^0). The jittering-code of level 0 has the value "1".

The Walsh-Hadamard-code-tree renders feasable a particularly simple way for determining jittering-codes for varios dimensions, in which the antenna-beam is being varied, which are orthogonal to one another.

According to a preferred embodiment of the present invention it is suggested that the jittering-codes of several Base Stations of the telecommunication system associated to the same User Equipment are synchronized to one another. By synchronizing the jittering-codes of these Base Stations of the telecommunication system mutual interferences between the signals received by the same User Equipment from different Base Stations are prevented. Therefore, the correction-signals received by the various Base Stations of the same telecommunication system have no bias, which would affect the closed loop control and would make the antenna-beams drift away.

The synchronization of the various Base Stations of the telecommunication system can be achieved in various ways, e. g. by transmitting a synchronisation-signal. According to a preferred embodiment of the invention the jittering-codes of the various Base Stations are synchronized by means of a Global Positioning System (GPS). This is an easy and cheap way of synchronizing the Base Stations of the same telecommunication system.

The jittering-codes of said various Base Stations preferably have different values. So mutual interferences between the signals received by the User Equipment from different Base Stations are prevented most effectively if the jittering-codes of the various Base Stations of the telecommunication system are orthogonal to one another, if they are synchronized to one another and if they have different values.

According to another preferred embodiment of the present invention said first means vary said antenna-beam in one dimension and a channellisation-code of the CDMA-telecommunication system is used as said jittering-code. In mobile telecommunication systems, which transmit signals by means of the CDMA-method between the Base Station and the User Equipment, the various signals are encoded according to a channellisation-code before transmission. In order to prevent mutual interferences of the signals the channellisation-codes are orthogonal to one another. By using these channellisation-codes as jittering-codes no additional orthogonal jittering-codes have to be created.

Alternativly, according to the present invention, it is suggested that said first means vary said antenna-beam in n dimensions and that a code is used as said jittering-code, which is 1 levels below the channellisation-code of the CDMA-telecommunication system in the Walsh-Hadamard-code-tree, with 1 = round up {log₂n}. If the antenna-beam is varied in more than one dimension an orthogonal jittering-code has to be determined for each dimension to prevent mutual interferences of the signals of each dimension. Therefore this very simple way for determining any desired number of orthogonal jittering-codes is proposed.

For instance, if a channellisation-code of level 7 of the Walsh-Hadamard-code-tree is used, it has a 128-bit-length (2^7), which means that there are up to 128 different channellisation-codes orthogonal to one another. This means that up to 128 User Equipment can be operated simultaniously by the Base Station without mutual interferences of the transmission-signals between the Base Station and the various User Equipment. Of course, the adjustment of the antenna-beam has to be carried out for each transmission between the Base Station and a User Equipment in order to locate the User Equipment in respect to the Base Station, to adjust the antenna-beam accordingly and to achieve an optimum in efficiency. If the antenna-beam is varied in n = 3 dimensions, three jittering-codes are needed. These are obtained by using codes which are 1 levels below the channellisation-code in the Walsh-Hadamard-code-tree. The value of 1 is calculated with 1 = round up {log₂n} = round up {ln 3/ln 2) = round up {1.099/0.693} = round up {1.586} = 2. This means that codes are used which are two levels below the channellisation-code, i. e. in level 9 of the code-tree. In that case the jittering-codes have a 512-bit-length (2^9) and are created in the way described above in connection with the Walsh-Hadamard-code-tree.

For evaluating the receiving characteristics of the signals in a very simple but effective way, according to a further development of the present invention, it is suggested that said third means compare said receiving characteristic with a given receiving level. The correction-signal then depends on whether the receiving characteristic is greater or less than the receiving level. The correction-signal may be a binary digit indicating whether the receiving characteristic is greater or less than the receiving level.

According to another preferred embodiment of the present invention it is proposed that said first means for emitting said signals, said second means for receiving said signals, said third means for evaluating said receiving characteristic, said fourth means for emitting said correction-signal and said fifth means for receiving said correction-signal make part of a closed loop power control (CLPC) of the telecommunication system.

The CLPC is available in most UMTS-telecommunication systems, which transmit signals according to the CDMA-method. The CLPC makes for adjusting the transmit-power between the Base Station and the User Equipment. An uplink closed loop power control is provided to adjust the User Equipment transmit-power in order to keep the received uplink Signal-to-Interference Ratio (SIR) at a given SIR-target. A downlink closed loop power control is provided to adjust the Base Station transmit-power in order to keep the received downlink-SIR at a given SIR-target. The function of the closed loop power control is described in detail in chapter 4.1.1 of the ETSI protocol "UMTS XX.07 V1.3.0", 1999-01 (published by the European Telecommunications Standards Institute (ETSI), France, Internet: http://www.etsi.org).

Roughly, the downlink closed loop power control works in the following way. The Base Station emits a signal which is received by a User Equipment. The User Equipment measures the power of the received signal and determines whether the downlink-SIR is greater or less than a given SIR-target. The User Equipment generates a correction-signal, which usually consists of one or more bits, the so called Transmit Power Control (TPC)-bits. The Base Station receives the TPC-bits and adjusts the downlink-power accordingly. In this way it can be ensured that the downlink-signal is powerful enough to enable a safe transmission even with the User Equipment being located in a radio shadow, e. g. when entering a building, or with a multipath-transmission.

Hence the CLPC may be used for determining the location of the User Equipment and for adjusting the antenna-beam of an adaptive antenna accordingly. The signal which is emitted with a given power is used as the signals emitted by the first means of the Base Station. The TPC-bits are used as correction-signal. The antenna-beam is adjusted according to the TPC-bits.

Said dimension in which the antenna-beam is being adjusted by said sixth means is preferebly the direction of said antenna-beam. It is further suggested that said dimension alternatively or additionally is the width of said antenna-beam.

Of course, the adaptive antenna of the mobile telecommunication system according to the present invention may be adjusted for downlink- and for uplink-transmission of signals. However, according to an advantageous embodiment of the present invention, it is suggested that said sixth means adjust said antenna-beam for the downlink-transmission of signals. The advantages of the present invention are apparent in particular when the antenna-beam of an adaptive antenna is adjusted for the downlink-transmission of signals.

According to another preferred embodiment of the present invention it is suggested that said Base Station comprises correlation means for correlating said correction-signal with said jittering-code for each dimension and that said sixth means adjust said antenna-beam according to the result of the correlation for each dimension. If the adaptive antenna is being varied in more than one dimension the correction-signal may contain mutual interferences caused by the signals for the various dimensions. By correlating the correction-signal with the jittering-code of each dimension a correlation-signal is obtained for each dimension in which the mutual interferences are eliminated. Preferebly, the correlation is performed over the length of a jittering-code-pattern, but of course, it may be performed over any other length as well. If the correction-signal and the jittering-code are represented by a number of bits, the correlation-signal will consist of one or more bits.

It is another object of the present invention to provide a Base Station of the kind mentioned in the beginning, which allows an adjustment of an adaptive antenna in a more simple way.

According to the invention, this object is solved by a Base Station of the kind mentioned in the beginning,
characterized in that said antenna-beam is adjusted by means of a closed loop control comprising said Base Station and said User Equipment, said Base Stations comprising
- first means for varying said antenna-beam in at least one dimension according to a given jittering-code and for emitting said signals with a given emitting characteristic,
- fifth means for receiving a correction-signal emitted by said User Equipment and
- sixth means for adjusting said antenna-beam according to said correction-signal.

The signals emitted by the Base Station are received by said User Equipment. The User Equipment evaluates the receiving characteristic of said signals and emits a correction-signal depending on the result of said evaluation of said receiving characteristic. The correction-signal is received by the Base Station. The antenna-beam is adjusted according to said correction-signal. The Base Station according to the present invention makes part of the closed loop control for easily adjusting the antenna-beam.

According to a preferred embodiment of the present invention said jittering-code is a code from an orthogonal code group. Such orthogonal codes are used, for example, as channellisation-codes for downlink- and uplink-transmission of signals by means of a Code Division Multiple Access (CDMA)-method. The CDMA-method is used in mobile telecommunication systems working according to the Universal Mobile Telecommunication System (UMTS)-standard. Therefore, the channellisation-codes of the UMTS-telecommunication system may be used as jittering-codes.

According to another preferred embodiment of the present invention it is suggested that the jittering-codes of said Base Station is synchronized with the jittering-codes of the other Base Stations of said telecommunication system.

According to yet another embodiment the jittering-codes of said Base Station are different to the jittering-codes of the other Base Stations of said telecommunication system.

Finally, it is suggested that as said correction-signal the Transmit Power Control (TPC)-bits of a Closed Loop Power Control (CLPC) of the telecommunication system is used.

It is another object of the present invention to provide a User Equipment of the kind mentioned in the beginning, which supports an adjustment of an adaptive antenna of the Base Station in a more simple way.

According to the invention, this object is solved by a User Equipment of the kind mentioned in the beginning,
characterized in that said antenna-beam is adjusted by means of a closed loop control comprising said Base Station and said User Equipment, said User Equipment comprising
- second means for receiving signals emitted by said Base Station,
- third means for evaluating the receiving
characteristic of said signals and
- fourth means for emitting a correction-signal, which depends on the result of said evaluation of said receiving characteristic, and depending on which the antenna-beam is adjusted.

The correction-signal is received by the Base Station. The Base Station then adjusts the antenna-beam according to said correction-signal. The User Equipment according to the present invention makes part of the closed loop control for easily adjusting the antenna-beam of said Base Station.

According to a preferred embodiment of the present invention it is suggested that as said correction-signal the Transmit Power Control (TPC)-bits of a Closed Loop Power Control (CLPC) of the telecommunication system is used.

Further embodiments of the present invention as well as further advantages of the invention are outlined in the following description of the figures.
- Figure 1: shows a symbolic illustration of the mobile telecommunication system according to the present invention in a preferred embodiment; and
- Figure 2: shows a Walsh-Hadamard-code-tree for determining a number of orthogonal channelisation-codes.

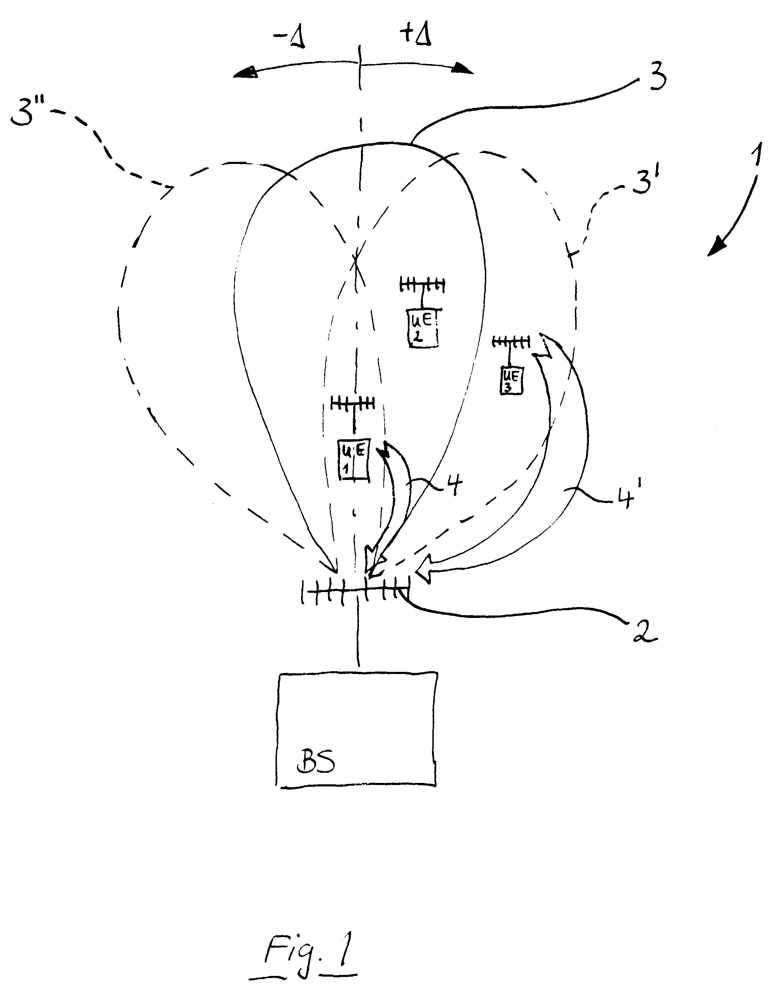

A mobile telecommunication system according to the present invention in a preferred embodiment is designated in its whole as reference numeral 1 in figure 1. The telecommunication system 1 comprises a Base Station BS and three User Equipment UE1 to UE3, which may be implemented as mobile phones of end users. The Base Station BS has an adaptive antenna 2 for downlink- and uplink-transmission of signals between said Base Station BS and said User Equipment UE1 to UE3 by means of an adjustable antenna-beam 3. The transmitted signals may be information-signals containing voice data or other information respectively or they may be control-signals containing data for controlling the transmission between the Base Station BS and the User Equipment UE1 to UE3. The antenna-beam 3 is adjustable in its direction, in its width or in any other dimension respectively. In the present embodiment of the invention the antenna-beam 3 is adjusted in its direction in order to improve the efficiency of the antenna 2. An improvement in efficiency allows the transmission of signals between the Base Station BS and the User Equipment UE1 to UE3 to be carried out with less antenna-power and will consequently reduce mutual interferences between the signals transmitted between the Base Station BS and the various User Equipment UE1 to UE3 and the signals transmitted between another Base Station and other User Equipment.

The mobile telecommunication system 1 according to the present embodiment of the invention works according to the Universal Mobile Telecommunication System (UMTS)-standard. In UMTS-telecommunication systems signals are transmitted between the Base Station BS and the User Equipment UE1 to UE3 by means of a Code Division Multiple Access (CDMA)-method. With the CDMA-method signals are encoded for transmission according to a channellisation-code. In order to prevent mutual interferences of the signals the channellisation-codes for encoding the signals are orthogonal to one another.

The telecommunication system 1 according to the present embodiment of the invention has a so called Closed Loop Power Control (CLPC), which makes for adjusting the transmit-power between the Base Station BS and the User Equipment UE1 to UE3. An uplink closed loop power control is provided to adjust the User Equipment transmit-power in order to keep the received uplink Signal-to-Interference Ratio (SIR) at a given SIR-target. A downlink closed loop power control is provided to adjust the Base Station transmit-power in order to keep the received downlink-SIR at a given SIR-target. A detailed description of the CLPC-function can be found in 3GPP TS 25.214 (3rd Generation Partnership Body).

Roughly, the downlink closed loop power control works in the following way. The Base Station BS emits a signal which is received by a User Equipment UE1 to UE3. The User Equipment UE1 to UE3 measures the power of the received signal and determines whether the downlink-SIR is greater or less than a given SIR-target. The User Equipment UE1 to UE3 generates a correction-signal 4, which usually consists of one bit, which for reasons of redundancy is repeated several times during transmission, the so called Transmit Power Control (TPC)-bits. The Base Station BS receives the TPC-bits and adjusts the downlink-power accordingly. In this way it can be ensured that the downlink-signal is powerful enough for a safe transmission of signals even with the User Equipment UE1 to UE3 being located in a radio shadow, e. g. when entering a building.

The Base Station BS of the telecommunication system 1 comprises first means for varying the antenna-beam 3. The antenna-beam 3 is varied in at least one dimension. According to the preferred embodiment of the invention shown in Figure 1 the direction of the antenna-beam 3 is varied between a first direction +Δ (antenna-beam 3') and a second direction -Δ (antenna-beam 3").

The antenna-beam 3 is varied according to a given jittering-code. The jittering-code may consist of a number of bits. Preferebly the channellisation-code for the encoding of signals for transmission with the CDMA-method is used as jittering-code. There is a seperate channellisation-code for the transmission of signals between the Base Station BS and each User Equipment UE. These channelisation-codes will do perfectly well as jittering-codes as long as the antenna-beam 3 is varied in one dimension only. However, if the antenna-beam 3 is varied in more than one dimension, e. g. the direction and the width of the antenna-beam 3 is varied, a seperate jittering-code has to be created for each dimension the antenna-beam 3 is varied in. For preventing mutual interferences between the signals of the various dimensions the jittering-codes should be orthogonal to one another.

A very simple but effective way of creating orthogonal jittering-codes is suggested in what follows. The channellisation-codes are determined by means of the so called Walsh-Hadamard-code-tree. Figure 2 shows a Walsh-Hadamard-code-tree with four levels. Beginning from the top of the tree the first level (level 0) contains only one possible channellisation-code with a 1-bit-length (2^0). The channellisation-code of level 0 has the value "1".

The next lower level of the tree contains twice the number and twice the length of channellisation-codes of the higher level, i. e. the second level (level 1) contains two codes of a 2-bit-length (2^1) each. The channellisation-codes of a certain level are orthogonal to one another. For every channellisation-code of a certain level two codes of the next lower level can be created. The first code of the next lower level is created by placing the channellisation-code of the higher level twice one after the other. So the first code of level 1 has the value "1 1". The second code of the next lower level is created by first placing the channellisation-code of the higher level and then placing the inverted channellisation-code of the higher level one after the other. So the second code of level 1 has the value "1 -1".

If more than one jittering-code is needed, not the channellisation-code itself is used as jittering-code, but codes of a level below the channellisation-code. Depending on the number of jittering-codes needed, i. e. the number of dimensions the antenna-beam 3 is varied in, the codes of a certain number of levels below the level of the channellisation-code are used as jittering-codes.

If the antenna-beam 3 is varied in n = 2 dimensions, two jittering-codes are needed. These are obtained by using codes which are 1 levels below the channellisation-code in the Walsh-Hadamard-code-tree. The value of 1 is calculated with 1 = round up {log₂n} = round up {ln 2/ln 2) = round up {1.0/1.0} = round up {1.0} = 1. This means that codes are used which are one level below the level of the channellisation-code. If the channellisation-code had a 128-bit-length (2^7; level 7), the jittering-codes in this example had a length of 256-bits (2^8; level 8).

The first means of the Base Station BS also emit signals with a given emitting characteristic. The emitting characteristic may, for example, be the power, the signal-to-interference ratio (SIR) or any other physical characteristic of the signals. Preferebly, the signals emitted by the Base Station BS in the scope of the Closed Loop Power Control (CLPC) are used as these signals.

The antenna-beam 3 is varied at a smaller frequency than the frequency of the signals being emitted by the Base Station BS. Typical values for the frequencies are about 1,500 Hz for the variation-frequency of the antenna-beam 3 and about 3.84 MHz for the transmitting-frequency of the signals.

The User Equipment UE1 to UE3 comprises second means for receiving said signals with a certain receiving characteristic. The receiving characteristic is of the same kind as the emitting characteristic, i. e. the power, the signal-to-interference ratio (SIR) or any other physical characteristic of the signals, but usually of a different value.

Depending on the location of the User Equipment UE1 to UE3 in respect to the antenna 2 of the Base Station BS the receiving characteristic will vary. If, for example, the varying antenna-beam 3 reaches the User Equipment UE1 to UE3 constantly, the receiving characteristic will have a more or less constant value. If, however, the varying antenna-beam 3 reaches the User Equipment UE1 to UE3 just from time to time the receiving characteristic will probably have a value oscillating with the variation-frequency of the antenna-beam 3. If the antenna-beam 3 reaches the User Equipment UE1 to UE3 more or less directly it is most probable that, for example, the power of the received signals has a higher value than if the antenna-beam 3 reached the User Equipment UE1 to UE3 only after a number of reflections at the front of buildings or at a series of mountains. It may therefore be said that the receiving characteristic of the signals depends very much on the location of the User Equipment UE1 to UE3 in respect to the Base Station BS.

If, furthermore, the antenna-beam 3 is varied in the dimension of its direction, the receiving characteristic of the signals will be different to the receiving characteristic of the signals if the antenna-beam 3 is varied in the dimension of its width.

The User Equipment UE1 to UE3 furthermore comprises third means for evaluating said receiving characteristic of the signals. Preferably the variation of the antenna-beam 3 is interrupted for a short period in order to let the User Equipment UE1 to UE3 carry out the reception of the signals by the second means and the evaluation of the received signals by the third means without disturbances.

In addition the User Equipment UE1 to UE3 comprises fourth means for emitting the correction-signal 4, which depends on the result of said evaluation of said receiving characteristic. The correction-signal 4 depends on the receiving characteristic of the signals and can be used as an indication for the location of the User Equipment UE1 to UE3 in respect to the Base Station BS. According to the present embodiment of the invention the Transmit Power Control (TPC)-bits of a Closed Loop Power Control (CLPC) of the mobile telecommunication system 1 is used as correction-signal 4.

The Base Station BS comprises fifth means for receiving the correction-signal 4. The Base Station BS, furthermore, comprises sixth means for adjusting the antenna-beam 3 according to the received correction-signal 4. Of course, before adjusting the antenna-beam, it has to be determined how the correction-signal 4 is to be interpreted, that is how the antenna-beam 3 has to be varied according to the correction-signal 4 so that the transmitted signals reach the User Equipment UE1 to UE3 with the highest efficiency possible. There are different ways of adjusting the antenna beam 3, preferebly the direction or the width of the antenna beam 3 is varied.

In Figure 1 three different cases of a User Equipment UE1 to UE3 being located within the reach of the antenna-beam 3 are shown. In the first case, User Equipment UE1 is located in respect to the Base Station BS in such a manner that it is constantly reached by the varying antenna-beam 3, 3' and 3". The User Equipment UE1 will receive the signals with a more or less constant receiving characteristic and therefore will emit a more or less constant correction-signal 4. The Base Station BS will adjust the antenna-beam 3 according to the correction-signal 4.

In the second case, User Equipment UE2 is located in respect to the Base Station BS in such a manner that it is reached by the antenna-beam 3 and the varied antenna-beam 3'. The User Equipment UE2 is located out of reach of the varied antenna-beam 3". Depending on whether the antenna-beam 3, 3' reaches the User Equipment UE2 or not, the User Equipment UE2 will receive the signals with varying receiving characteristics and therefore will emit a varying correction-signal 4. The Base Station BS will adjust the antenna-beam 3 according to the correction-signal 4.

In the third case it is presumed that User Equipment UE3 is located in respect to the Base Station BS in such a manner that only the varied antenna-beam 3' reaches the User Equipment UE3. Depending on whether the antenna-beam 3' reaches the User Equipment UE3 or not the User Equipment UE3 will receive the signals with varying receiving characteristics and therefore will emit a varying correction-signal 4. The Base Station BS will adjust the antenna-beam 3 according to the varying correction-signal 4.

Optionally the Base Station BS may furthermore comprise correlation means for correlating said correction-signal 4 with said jittering-code for each dimension. If the adaptive antenna 2 is being varied in more than one dimension the correction-signal 4 may contain mutual interferences caused by the signals of the various dimensions. By correlating the correction-signal 4 with the jittering-codes of each dimension a correlation-signal is obtained for each dimension in which the mutual interferences are eliminated. Preferebly, the correlation is performed over the length of the jittering-code-pattern, but, of course, it may be performed over any other length as well.

The correlation means may also correlate the correction-signal 4 of one the User Equipment UE1 to UE3 operated by the Base Station BS with the correction-signals 4 of the other User Equipment UE1 to UE3 operated by said Base Station BS. If the Base Station BS operates more than one User Equipment UE1 to UE3 simultaniously the correction-signal 4 may contain mutual interferences caused by the signals during transmission between the Base Station BS and the various User Equipment UE1 to UE3. By correlating the correction-signal 4 of one User Equipment UE1 to UE3 with the correction-signals 4 of the other User Equipment UE1 to UE3 operated by the same Base Station BS a correlation-signal is obtained for each User Equipment UE1 to UE3 in which the mutual interferences are eliminated. The mutual interferences are eliminated because the correction-signals 4 are orthogonal to one another due to the orthogonality of the channellisation-codes used by the Base Station BS. The sixth means then adjust said antenna-beam 3 according to the result of the correlation for each dimension.

The mobile telecommunication system 1 according to the present invention has the advantage, that the antenna-beam 3 of the adaptive antenna 2 can be adjusted in a very simple way. For adjusting the antenna-beam 3 a closed loop control is used.

## Claims

1. Mobile telecommunication system (1) comprising at least one Base Station (BS) and at least one User Equipment (UE), a Base Station (BS) having an adaptive antenna (2) for downlink- and uplink-transmission of signals between said Base Station (BS) and a User Equipment (UE) by means of an adjustable antenna-beam (3), **characterized in** that said antenna-beam (3) is adjusted by means of a closed loop control comprising said Base Station (BS) and said User Equipment (UE),
- said Base Station (BS) comprising first means for varying said antenna-beam (3) in at least one dimension according to a given jittering-code and for emitting said signals with a given emitting characteristic,
- said User Equipment (UE) comprising second means for receiving said signals with a certain receiving characteristic,
- said User Equipment (UE) comprising third means for evaluating said receiving characteristic,
- said User Equipment (UE) comprising fourth means for emitting a correction-signal (4), which depends on the result of said evaluation of said receiving characteristic,
- said Base Station (BS) comprising fifth means for receiving said correction-signal (4) and
- said Base Station (BS) comprising sixth means for adjusting said antenna-beam (3) according to said correction-signal (4).

2. Telecommunication system (1) according to claim 1, characterized in that said signals are transmitted by means of a Code Division Multiple Access (CDMA)-method between said Base Station (BS) and said User Equipment (UE).

3. Telecommunication system (1) according to claim 1 or 2, characterized in that said jittering-code is a code from an orthogonal code group.

4. Telecommunication system (1) according to claim 3, characterized in that the jittering-code is determined by means of the Walsh-Hadamard-code-tree.

5. Telecommunication system (1) according to claim 3 or 4, characterized in that the jittering-codes of several Base Stations (BS) of said telecommunication system (1) associated to the same User Equipment (UE) are synchronized to one another.

6. Telecommunication system (1) according to claim 5, characterized in that the jittering-codes of said various Base Stations (BS) are synchronized by means of a Global Positioning System (GPS).

7. Telecommunication system (1) according to claim 5 or 6, characterized in that the jittering-codes of said vaious Base Stations (BS) have different values.

8. Telecommunication system (1) according to one of the claims 2 to 7, characterized in that said first means vary said antenna-beam (3) in one dimension and that a channellisation-code of the CDMA-telecommunication system is used as said jittering-code.

9. Telecommunication system (1) according to claim 4 to 7, characterized in that said first means vary said antenna-beam (3) in n dimensions and that a code is used as said jittering-code, which is 1 levels below the channellisation-code of the CDMA-telecommunication system (1) in the Walsh-Hadamard-code-tree, with l = round up {log₂n}.

10. Telecommunication system (1) according to one of the claims 1 to 9, characterized in that said third means compare said receiving characteristic with a given receiving level and that said correction-signal (4) depends on whether the receiving characteristic is greater or less than the receiving level.

11. Telecommunication system (1) according to claim 10, characterized in that said first means for emitting said signals, said second means for receiving said signals, said third means for evaluating said receiving characteristic, said fourth means for emitting said correction-signal (4) and said fifth means for receiving said correction-signal (4) make part of a closed loop power control (CLPC) of the telecommunication system (1).

12. Telecommunication system (1) according to one of the claims 1 to 11, characterized in that said dimension in which said antenna-beam (3) is being adjusted by said sixth means is the direction of said antenna-beam (3).

13. Telecommunication system (1) according to one of the claims 1 to 12, characterized in that said dimension in which said antenn-beam (3) is being adjusted by said sixth means is the width of said antenna-beam (3).

14. Telecommunication system (1) according to one of the claims 1 to 13, characterized in that said sixth means adjust said antenna-beam (3) for the downlink-transmission of signals.

15. Telecommunication system (1) according to one of the claims 9 to 14, characterized in that said Base Station (BS) comprises correlation means for correlating said correction-signal (4) with said jittering-code for each dimension and that said sixth means adjust said antenna-beam (3) according to the result of the correlation for each dimension.

16. Base Station (BS) of a mobile telecommunication system (1), the Base Station (BS) having an adaptive antenna (2) for downlink- and uplink-transmission of signals between said Base Station (BS) and a User Equipment (UE) of said mobile telecommunication system (1) by means of an adjustable antenna-beam (3), **characterized in** that said antenna-beam (3) is adjusted by means of a closed loop control comprising said Base Station (BS) and said User Equipment (UE), said Base Stations (BS) comprising
- first means for varying said antenna-beam (3) in at least one dimension according to a given jittering-code and for emitting said signals with a given emitting characteristic,
- fifth means for receiving a correction-signal (4) emitted by said User Equipment (UE) and
- sixth means for adjusting said antenna-beam (3) according to said correction-signal (4).

17. Base Station (BS) according to claim 16, characterized in that said jittering-code is a code from an orthogonal code group.

18. Base Station (BS) according to claim 16 or 17, characterized in that the jittering-codes of said Base Station (BS) is synchronized with the jittering-codes of the other Base Stations (BS) of said telecommunication system (1).

19. Base Station (BS) according to claim 17 or 18, characterized in that the jittering-codes of said Base Station (BS) are different to the jittering-codes of the other Base Stations (BS) of said telecommunication system (1).

20. Base Station (BS) according to one of the claims 16 to 19, characterized in that as said correction-signal (4) the Transmit Power Control (TPC)-bits of a Closed Loop Power Control (CLPC) of the telecommunication system (1) is used.

21. User Equipment (UE) of a mobile telecommunication system (1) comprising at least one Base Station (BS) and at least said User Equipment (UE), a Base Station (BS) having an adaptive antenna (2) for downlink- and uplink-transmission of signals between said Base Station (BS) and said User Equipment (UE) by means of an adjustable antenna-beam (3), **characterized in** that said antenna-beam (3) is adjusted by means of a closed loop control comprising said Base Station (BS) and said User Equipment (UE), said User Equipment (UE) comprising
- second means for receiving signals emitted by said Base Station (BS),
- third means for evaluating the receiving characteristic of said signals and
- fourth means for emitting a correction-signal (4), which depends on the result of said evaluation of said receiving characteristic, and depending on which the antenna-beam (3) is adjusted.

22. User Equipment (UE) according to claim 21,
characterized in that as said correction-signal (4) the Transmit Power Control (TPC)-bits of a Closed Loop Power Control (CLPC) of the telecommunication system (1) is used.
